# EUROPÄISCHE PATENTANMELDUNG

(11) **EP 2 636 658 A2**
(43) Veröffentlichungstag der Anmeldung: **11.09.2013**
(21) Anmeldenummer: 13000242.1
(22) Anmeldetag: 17.01.2013
(51) Int. Cl.: C04B 35/10, C04B 38/00, C04B 38/08

(54) **Verfahren zur Herstellung eines offenporigen keramischen Formkörpers**

(30) Priorität: 07.03.2012 DE 102012004708
(71) Anmelder: Jaeckel, Manfred, 27612 Loxstedt (DE)
(72) Erfinder: Jaeckel, Manfred, 27612 Loxstedt (DE)
(74) Vertreter: Herrmann, Uwe

(57) **Zusammenfassung**

Die vorliegende Erfindung betrifft ein Verfahren zur Herstellung eines offenporigen keramischen Formkörpers, wobei das Verfahren den Schritt des Aufbringens von Aluminium oder eines aluminiumhaltigen Mediums auf die äußere Oberfläche eines oder mehrerer poröser keramischer Körper und/oder keramischer Hohlkörper, vorzugweise keramischer Hohlkugeln umfasst und wobei das Verfahren des weiteren den Schritt der teilweisen oder vollständigen Oxidation des Aluminiums zu Aluminiumoxid umfasst.

## Beschreibung

Die vorliegende Erfindung betrifft ein Verfahren zur Herstellung eines offenporigen keramischen Formkörpers.

Es ist aus dem Stand der Technik bekannt, keramische Hohlkugelstrukturen zu erzeugen, indem sogenannte Grünhohlkugeln, also beispielsweise polymergebundene Keramikpulver-Hohlkugeln oder polymergebundene Keramikbeschichtungen auf expandierten Polystyrolgranulaten durch Wärmeeinwirkung oder Verkleben zu Strukturen geformt werden. Diese Strukturen werden in einem angeschlossenen Entbinderungs - und Pyrolyseprozess bei Sintertemperaturen von über 1000 °C zu einem keramischen Formkörper gebrannt.

Aus der EP 0 300 543 B1 ist die Beschichtung von Polystyrolkugel Schaumgranulaten mit Keramikpulver bekannt sowie auch die Verbindung dieser Grünkugeln untereinander durch Nachexpandieren mit Wasserdampf, wobei die Berührungspunkte gegenseitig verkleben. Nach dem Pyrolyse- und Sinterprozess bilden die Formkörper einen offenzellige keramische Hohlkugelstruktur.

Die EP 1 329 438 A1 beschreibt ein ähnliches Verfahren unter Verwendung von Polystyrolgranulat. Dabei wird eine Schüttung von vorbeschichtetem Polystyrolgranulat mit einem Keramikslurry beschichtet, getrocknet, pyrolysiert und gebrannt. Dabei entsteht ebenfalls eine offenzellige keramische Hohlkugelstruktur.

In den bekannten Verfahren oder auch bei weiteren Verfahren, bei denen als Ausgangsstoffe ungesinterte Grünkugeln verwendet werden, wird ein Pyrolyse- und Sinterprozess durchlaufen, um zu den gewünschten Hohlkugelstrukturen zu gelangen. Dabei kommt es zu Schwindungsprozessen, bei denen Schwindungswerte in der Größenordnung von 16 bis 25 % auftreten. Dies kann zu erheblichen Problemen im Hinblick auf eine Rissbildung bis hin zum Totalbruch führen. Große Formteilabmessungen sind daher nur schwer rissfrei herstellbar, so dass die bekannten Verfahren eher für kleinere Formteile geeignet sind.

Der vorliegenden Erfindung liegt die Aufgabe zugrunde, ein Verfahren der eingangs genannten Art dahingehend weiterzubilden, dass bei dem Verfahren keine oder eine geringere Schwindung auftritt, als bei bekannten Verfahren. Vorzugsweise soll der nach dem erfindungsgemäßen Verfahren hergestellte Formkörper für Hochtemperaturanwendungen geeignet sein.

Diese Aufgabe wird durch ein Verfahren mit den Merkmalen des Anspruchs 1 gelöst. Danach ist vorgesehen, dass das Verfahren den Schritt des Aufbringens von Aluminium auf einen oder mehrere poröse keramische Körper und/oder keramische Hohlkörper, vorzugweise Hohlkugeln umfasst und dass das Verfahren des weiteren den Schritt der teilweisen oder vollständigen Oxidation des Aluminiums zu Aluminiumoxid umfasst. Als Verbindungsmittel dient ausschließlich oder unter anderem vorzugsweise reines Aluminiumoxid, das während des Herstellprozesses des Formkörpers durch Oxidation von Aluminium bzw. Aluminiumpulver, d.h. durch eine chemische Reaktion entsteht.

Vorzugsweise wird durch das Verfahren ein keramischer Leichtkörper erhalten, der vorzugsweise ausschließlich unter Verwendung von keramischen Hohlkörpern bzw. keramischen Hohlkugeln geschaffen wird, die durch ein Verbindungsmittel miteinander in Verbindung stehen bzw. zusammengehalten werden. Dieses Verbindungsmittel wird durch Aluminiumoxid gebildet oder enthält Aluminiumoxid. Aufgrund seiner keramischen Bindung ist der erfindungsgemäß hergestellte Formkörper für Hochtemperaturanwendungen geeignet. Besonders vorteilhaft ist es, wenn als Werkstoff für die Hohlkörper bzw. Hohlkugeln ebenfalls Aluminiumoxid verwendet wird. Als idealer Hohlkugelwerkstoff wird daher vorzugsweise reines Aluminiumoxid verwendet. Vorzugsweise ist des Weiteren vorgesehen, dass im gebrannten Leichtkörper reines Aluminiumoxid als Verbindungsmittel vorliegt.

Das erfindungsgemäß als Verbindungsmittel im Formkörper vorliegende Aluminiumoxid stellt eine sehr feste Verbindung zwischen den einzelnen Hohlkörpern bzw. Hohlkugeln sicher, deren Festigkeit auch nach häufigem Temperaturwechsel beibehalten wird.

Ein weiterer Vorteil des erfindungsgemäßen Verfahrens besteht darin, dass im Rahmen eines Brennprozesses keine oder nur eine geringe Schwindung auftritt, so dass das Verfahren auch zur Herstellung größerer Formkörper in Betracht kommt.

Der erfindungsgemäße bzw. erfindungsgemäß hergestellte Formkörper weist eine offenporige Struktur auf, d.h. er weist offene Poren zwischen den einzelnen Hohlkörper- bzw. Hohlkugelschalen auf. Aufgrund dieser offenen Porosität und der hohen Qualität der Bindung des Verbindungsmittels an den äußeren Oberflächen der Hohlkörper- bzw. Hohlkugelschalen, weist der Formkörper oder Leichtkörper eine gute Thermoschockbeständigkeit auf.

Weiterhin weist der erfindungsgemäße bzw. der erfindungsgemäß hergestellte Formkörper vorzugsweise ein stofflich einheitliches Werkstoffgefüge auf, was den Vorteil mit sich bringt, dass keinerlei thermisch bedingte Spannungen aufgrund von unterschiedlichen Ausdehnungskoeffizienten auftreten können.

Die aus Aluminiumoxid bestehende oder dieses enthaltende Schicht muss nicht zwingend als Klebeschicht eingesetzt werden, die zwei Teile miteinander verbindet. Von der Erfindung ist auch der Fall umfaßt, dass das Aluminium, insbesondere das Aluminiumpulver bzw. das daraus gebildete Aluminiumoxid einseitig als Deckschicht eingesetzt wird. Nach dem Brennen ergibt sich eine sehr geringe Gasdurchlässigkeit. Von der Erfindung ist somit auch der Gedanke umfaßt, die Außenoberfläche eines Hohlkugel- bzw. mikroporösen Keramikformkörpers mit einer Deck-, schicht bestehend aus oder enthaltend Aluminium, insbesondere Aluminiumpulver zu versehen und nach dem Brennen eine Schicht zu erhalten, die gasundurchlässig ist oder eine sehr geringe Gasdurchlässigkeit aufweist.

Diese Art der Anwendung ist beispielsweise für den Einsatz von Platten aus Hohlkugel- und mikroporösen Keramiken denkbar, insbesondere wenn es um Anwendungen mit aggressiven Gasen geht.

In bevorzugter Ausgestaltung der Erfindung ist vorgesehen, dass der zur Oxidation von Aluminium bzw. des Aluminiumpulvers erforderliche Sauerstoff durch Luftsauerstoff gebildet wird.

Vorzugsweise wird als reaktiver Binder reines Aluminiumpulver verwendet, das sich durch Oxidation in Luft bei entsprechenden Temperaturen quantitativ zu Aluminiumoxid umwandelt. Diese chemische Reaktion ist mit einem großen Volumenwachstum verbunden, was sich vorteilhaft auf die oben beschriebene Schwindungsproblematik auswirkt und dazu führt, dass während des Herstellprozesses insgesamt keine oder nur eine relativ geringe Schwindung auftritt.

Die bei der chemischen Oxidationsreaktion entstehenden Aluminiumoxidkristalle wachsen in die zwischen Pulverteilchen bzw. in die zwischen den Hohlkörpern vorhanden Hohlräume bzw. Zwickel hinein, wobei eine feste Bindung zu den Teilchen bzw. Hohlkörpern und insbesondere Hohlkugeln entsteht. Dabei entsteht kein lineares Wachstum am Formteil.

In bevorzugter Ausgestaltung der Erfindung ist vorgesehen, dass die Gesamtmischung (Aluminium bzw. Aluminiumpulver mit wäßrigem Binder und keramischen Hohlkörpern bzw. Hohlkugeln), vorzugsweise in einer Form, zunächst getrocknet und dann einer thermischen Behandlung unterzogen wird, wobei vorzugsweise vorgesehen ist, dass die Trocknung in einem Temperaturbereich von 30 °C bis 110 °C und die thermische Behandlung in einem Temperaturbereich von 300 °C bis 1600 °C durchgeführt wird.

Für eine spätere gute Bindung ist es von Vorteil, wenn das Aluminiumpulver eine möglichst geringe bzw. feine Korngröße besitzt und mit hoher Gründichte hauptsächlich zwischen den Hohlkörpern bzw. Hohlkugeln in den Zwickeln und möglichst wenig auf der kontaktfreien Oberfläche verteilt wird. Dazu ist es vorteilhaft, dass das Aluminiumpulver zunächst homogen in einem z.B. wässrigen Binder verteilt wird und dann als flüssiger Binder bzw. als Bestandteil eines flüssigen Binders in die Hohlkörper bzw. Hohlkugeln eingemischt wird. Dieses breiige Gesamtgemisch lässt sich einfach und gut in eine Form, z.B. in eine Form zur Herstellung einer Platte einbringen und beispielsweise mit einer Walze in der Form gleichmäßig verteilen und verdichten.

Durch Kapillarwirkung zieht sich der Aluminium, insbesondere Aluminiumpulver enthaltende Binder überwiegend in die Zwickel zwischen den Hohlkörpern bzw. den Hohlkugeln oder dergleichen. Beim Trocknen bleibt der Großteil des Aluminiums bzw. des Aluminiumpulvers gemeinsam mit dem Polymerkleber oder einem sonstigen Bestandteil des Binders insbesondere an den Kontaktstellen der Hohlköperstruktur bzw. der Hohlkugelstruktur bzw. der Hohlkörper bzw. der Hohlkugeln in dem Formkörper.

Vorteilhaft ist es somit, wenn das Aluminium, insbesondere das Aluminiumpulver zunächst mit einem Binder, insbesondere mit einem wässrigen oder einem sonstigen Binder vermischt wird und diese Mischung sodann mit den keramischen Hohlkörpern bzw. Hohlkugeln zu einer Gesamtmischung vermischt wird. Die Gesamtmischung ist vorzugsweise breiartig und lässt sich leicht in eine Form, z.B. zur Herstellung einer Platte einbringen und ggf. mit einer Walze in der Form gleichmäßig verteilen und verdichten.

Der Binder kann wenigstens ein wasserlösliches Polymer, insbesondere Polyvinylpyrrolidon und/oder Polyvinylalkohol aufweisen.

In bevorzugter Ausgestaltung der Erfindung ist vorgesehen, dass das Aluminium bzw. das Aluminiumpulver einen Reinheitsgrad von mindestens 99 %, vorzugsweise von mindestens 99,5 % aufweist. Die Pulverteilchen können eine Partikelgröße im Bereich von 0,001 mm und 0,1 mm, vorzugsweise im Bereich von 0,005 mm bis 0,05 mm aufweisen. Des Weiteren kann vorgesehen sein, dass das Aluminium bzw. das Aluminiumpulver mit weiteren Elementen, insbesondere Magnesium, Silizium, Titan, Yttrium und/oder Lanthan legiert ist.

Bevorzugt ist es weiterhin, wenn die Hohlkörper bzw. die Hohlkugeln einen Außendurchmesser im Bereich von 0,1 mm bis 3,0 mm, vorzugsweise im Bereich von 0,25 mm bis 1,0 mm aufweisen

In weiterer Ausgestaltung der Erfindung ist vorgesehen, dass die Hohlkörper bzw. Hohlkugeln aus einer keramischen Schmelze durch Verdüsen oder durch einen Sinterprozess hergestellt werden.

Wie oben ausgeführt, ist es von Vorteil, wenn die Hohlkörper bzw. Hohlkugeln aus Aluminiumoxid bestehen oder dieses aufweisen. Das Aluminiumoxid kann einen Reinheitsgrad von mindestens 95 %, vorzugsweise von mindestens 98 % aufweisen.

Die vorliegende Erfindung betrifft des Weiteren ein Verfahren zum Verbinden von Formkörpern, insbesondere von mikroporösen Formkörpern, miteinander, wobei das Verfahren den Schritt des Aufbringens von Aluminium oder eines aluminiumhaltigen Mediums auf die äußere Oberfläche eines oder beider miteinander zu verbindender Formkörper umfasst und dass das Verfahren des weiteren den Schritt der teilweisen oder vollständigen Oxidation des Aluminiums zu Aluminiumoxid umfasst.

Bei den Formkörpern kann es sich beispielsweise um planparallele Platten, insbesondere um planparallele mikroporöse Platten handeln.

Das Verfahren kann gemäß dem kennzeichnenden Teil eines der der Ansprüche 2 bis 7 ausgeführt sein.

So ist es beispielsweise möglich, mikroporöse Formkörper, insbesondere mikroporöse Platten durch Verkleben mit Aluminiumpulverschichten und anschließendem Brennen in Luft zu dicken Platten, vorzugsweise mit reinem Aluminiumoxidbinder zu verarbeiten. Durch Verkleben mit Aluminiumbinder sind wesentlich dickere Platten, insbesondere mit einer Dicke > 12 mm oder sonstige Körper vorzugsweise mit der erfindungsgemäßen mikroporösen Struktur zu erhalten.

Die vorliegende Erfindung betrifft des Weiteren einen Formkörper umfassend eine Mehrzahl von einzelnen Formkörpern, insbesondere mikroporösen Formkörpern, und/oder insbesondere offenporiger keramischer Formkörper umfassend eine Mehrzahl von keramischen Hohlkörpern, insbesondere Hohlkugeln, wobei sich zwischen den einzelnen Formkörpern bzw. zwischen den Hohlkörpern ein Verbindungsmittel befindet, dass aus Aluminiumoxid besteht oder dieses umfasst.

Dabei ist vorzugsweise vorgesehen, dass die Hohlkörper bzw. Hohlkugeln aus Aluminiumoxid bestehen oder dieses aufweisen. In einer bevorzugten Ausführungsform besteht nicht nur das Verbindungsmittel, sondern auch die durch dieses verbundenen Hohlkörper aus Aluminiumoxid oder weisen Aluminiumoxid auf.

Weiterhin kann vorgesehen sein, dass die Hohlkörper bzw. Hohlkugeln Schalenbruch aufweisen, wobei vorzugsweise vorgesehen ist, dass die Hohlkörper bzw. Hohlkörper einen Schalenbruch von unter 10 Gew.-% aufweisen.

In bevorzugter Ausgestaltung der Erfindung ist vorgesehen, dass der Formkörper nach einem erfindungsgemäßen Verfahren hergestellt ist.

Die vorliegende Erfindung betrifft des Weiteren die Verwendung von Aluminium, insbesondere von Aluminiumpulver als Bestandteil eines Verbindungsmittels, das zwischen Hohlkörpern, insbesondere Hohlkugeln eines offenporigen keramischen Formkörpers eingebracht wird und/oder das zwischen gesinterten Formteilen und/oder das zwischen Formkörpern, insbesondere zwischen mikroporösen Formkörpern eingebracht wird.

Bei dem Formkörper handelt es sich vorzugsweise um einen Formkörper gemäß der vorliegenden Erfindung. Vorzugsweise ist der Formkörper gemäß dem erfindungsgemäßen Verfahren hergestellt.

In bevorzugter Ausgestaltung der Erfindung ist vorgesehen, dass das Aluminium bzw. das Aluminiumpulver einen Reinheitsgrad von über 99 %, vorzugsweise von über 99,5 % aufweist und/oder dass das Aluminium bzw. das Aluminiumpulver mit weiteren Elementen, insbesondere Magnesium, Silizium, Titan, Yttrium und/oder Lanthan legiert ist, und/oder dass das Aluminium in Pulverform vorliegt, wobei vorzugsweise vorgesehen ist, dass die Pulverteilchen eine Partikelgröße im Bereich von 0,001 mm und 0,1 mm, vorzugsweise im Bereich von 0,005 mm bis 0,05 mm aufweisen.

Vorzugsweise ist vorgesehen, dass der Formkörper nach dem Trocknen zunächst langsam in Luftatmosphäre auf ca. 500 °C erhitzt wird, wobei der Polymerbinder oxidativ abgebaut und verbrannt wird. Anschließend hat der Formkörper eine hinreichende Eigenfestigkeit und kann zügig weiter erhitzt werden. Ab ca. 800 °C, d.h. oberhalb des Schmelzpunktes von Aluminium beginnt der Oxidationsprozess des Aluminiums allmählich. Bei weiterer Temperaturerhöhung bis 1300 °C schreitet die Oxidation des Aluminiums weiter fort, eine deutlich schnelle Oxidation erhält man bei Temperaturen ab 1500 °C. Dann sind auch die dickeren Ansammlungen von Aluminium in der Struktur durchoxidiert.

Des Weiteren ist es möglich, eine schmelzbare Funktionsschicht auf die Hohlkörper, insbesondere auf die Hohlkugeln aufzubringen. Diese Funktionsschicht kann Aluminium bzw. Aluminiumpulver und ein vorzugsweise organisches Additiv aufweisen oder daraus bestehen. Die mit einer solchen Funktionsschicht ausgestatteten Hohlkörper bzw. Hohlkugeln sind freifließend und können daher auch in komplizierte Formen eingebracht werden. Somit sind auch komplizierter dimensionierte Formteile herstellbar. Durch Vibration kann eine homogene Verteilung der Hohlkörper bzw. Hohlkugeln erreicht oder unterstützt werden.

Wird die Form umfassend eine Masse derartiger Hohlkörper bzw. Hohlkugeln auf Temperaturen über den Schmelzbereich der Funktionsschicht, z.B. über 100 °C erhitzt, so bilden sich in den Zwickeln durch Kapillar- und Adhäsionskräfte Anreicherungen von Al-Pulver. Diese werden nach dem Austreiben der Additive und während des Brennvorgangs in Luftatmosphäre zu dem Aluminiumoxid Verbindungsmittel chemisch umgewandelt wird und zwar in der gleichen Weise, wie bei der Einbringung des Aluminiumpulvers über einen Flüssigbinder.

Eine Nebenanwendung bei der Nutzung des erfindungsgemäßen Binders bzw. von Aluminium besteht darin, dass sich Aluminiumpulverschichten auch zum Verkleben von porösen, Luft durchlässigen Keramiken eignen. Im Prinzip werden dann keine Hohlkörper bzw. Hohlkugeln untereinander schwindungsfrei verbunden werden, sondern gesinterte Formteile miteinander.

Das Aluminium bzw. das Aluminiumpulver kann beispielsweise in Form eines Flüssigbinders zwischen die zu "verklebenden" Grenzflächen bzw. Hohlkörper eingebracht werden, oder auch bei größeren Flächen in Form einer Folie, insbesondere thermoplastischen Aluminiumpulver Grünfolie, die durch Hitzeanwendung einen Verbund mit dem Aluminiumpulver herstellt.

Weitere Einzelheiten und Vorteile der Erfindung werden anhand eines im Folgenden beschriebenen Ausführungsbeispiels näher erläutert. Es zeigen:

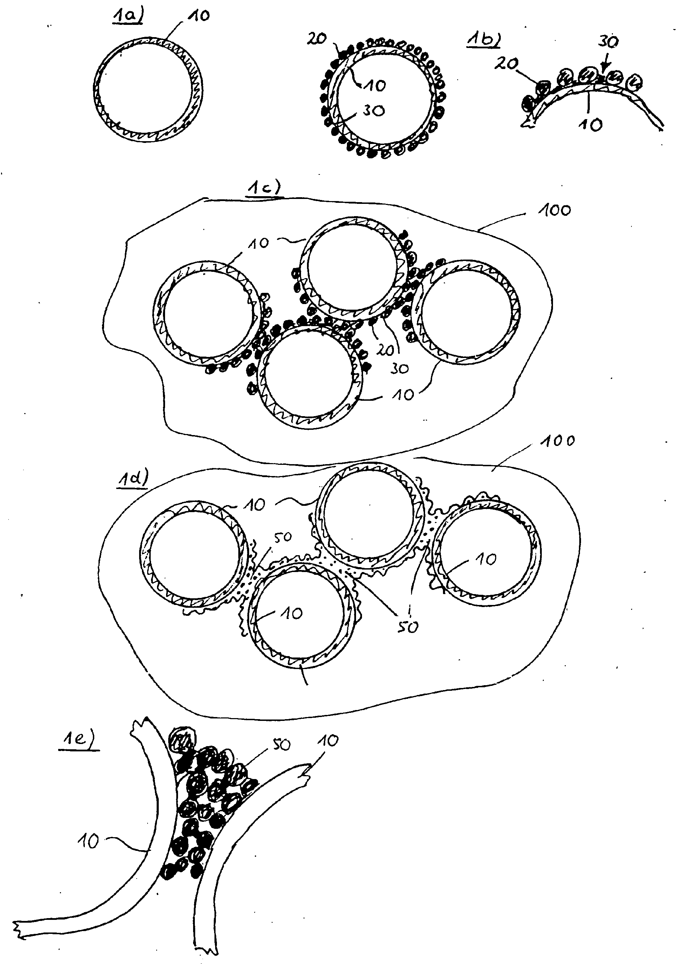

Figur 1: schematische Ansichten einer keramischen Hohlkugel und deren Anordnung einem Formkörper.
Figur 1a zeigt eine keramische Hohlkugel 10, die beispielsweise aus Al₂O₃ besteht.
Figur 1b zeigt die keramische Hohlkugel 10, die mit einem Aluminiumpulver 20 auf einer dünnen Binderschicht 30 beschichtet ist.
Figur 1c offenbart einen Teilbereich eines Formkörpers bzw. der Hohlkugelstruktur 100 vor dessen/deren thermischer Behandlung. Wie dies aus Figur 1c hervorgeht, besteht der Formkörper bzw. der Grünkörper aus eine Mehrzahl von Hohlkugeln 10, die mit einer Beschichtung auf ihrer Oberfläche versehen sind. Diese Beschichtung besteht aus in einem wässrigen Binder 30 aufgenommenen Aluminiumpulverpartikeln 20.
Figur 1d zeigt den Teilbereich gemäß Figur 1c nach einer thermischen Behandlung bei 1600 °C für 1 Stunde unter oxidischen Bedingungen. Wie dies aus Figur 1d hervorgeht, ist das aufgebrachte Aluminiumpulver zu Al₂O₃ oxidiert (Bezugszeichen 50) und dient in diesem Zustand als Verbindungsmittel zur Verbindung der einzelnen Al₂O₃ Hohlkugeln 10. Wie dies aus der Figur hervorgeht, liegt das Al₂O₃ als Verbindungsmittel ausschließlich oder jedenfalls überwiegend in den Zwickeln zwischen den Hohlkugeln 10 vor.
Figur 1e zeigt eine Vergrößerung des Zwickelbereiches zwischen zwei Hohlkugeln 10. Die vor der thermischen Behandlung als Aluminium vorliegenden Teilchen sind während der Oxidation ohne Schwindung miteinander verwachsen. Diese Oxidationsschichten sind nach Innen gewachsen, so dass kein äußerer Volumenzuwachs eintritt.

Im Folgenden wir beispielhaft die Herstellung einer Hohlkugelkorundplatte mit schmelztechnisch hergestellten Hohlkugeln und Inertgas verdüstem Aluminiumpulver beschrieben.

Als wässriger Binder wird eine wässrige Polyvinylpyrrolidonlösung verwendet. Als Beispiel dient 10 g Luvitec K90 (Polyvinylpyrrolidon der Fa. BASF), das mit 90 g destilliertem Wasser vermischt bzw. darin gelöst wird.

Als Aluminiumpulver wird ECKA Aluminiumgrieß AS, MEP 167 CL der Fa. Mepura, Österreich verwendet.

Zur Herstellung bzw. als Ansatz werden 180 ml (= 172 g) Alodur-Hohlkugeln mit einem Außendurchmesser von 0,25 - 0,5 mm der Fa. Treibacher-Schleifmittel Zschornewitz GmbH mit 15 g des genannten Aluminiumpulvers MEP 167 CL sowie mit 35 g des genannten wässrigen Binders (10 % K 90 Lösung) bereitgestellt.

Zunächst wird das Aluminiumpulver homogen in einem PE-Behälter von Hand in die Binderlösung eingerührt, und dann die Hohlkugeln durch Mischen von Hand gleichmäßig untergemischt bis das Gemenge eine einheitliche blaugraue Farbe aufweist.

Diese Gesamtmischung aus Aluminiumpulver, Binder und Hohlkugeln bildet eine breiartige Masse, umfassend die in den wässrigen Binder eingemischten Hohlkugeln, die in eine mit Silikon-Trennmittel bestrichene Form eingetragen wird. Beispielsweise weist diese Form Abmessungen 100 mm x 170 mm x 8 mm auf.

Die Masse wurde mit einer Maurerkelle gleichmäßig verteilt und anschließend mit einem Metallrohr bis auf die seitliche begrenzte Kantenhöhe von 8 mm ausgewalzt. Die überschüssige Masse wurde seitlich über die Kante abgequetscht.

Zum Zwecke der Trocknung wird wie folgt verfahren: Die Masse wurde in der Form für 6 Stunden bei 40 °C und bei 1 Stunde bei 100°C getrocknet. Sodann wird die hergestellte Platte der Form mit hoher Grünfestigkeit entnommen.

An die Trocknung schließt sich die thermische Behandlung wie folgt an:

Die Platte wird liegend mit einer Temperaturerhöhungsgeschwindigkeit von 30 K/Stunde auf 350 °C erhitzt und nach der Abkühlung dem Hochtemperaturofen zugeführt.

In dem Hochtemperaturofen werden die folgenden Bedingungen eingestellt:

Mit einer Aufheizrate von 60 °C/Stunde wird bis auf eine Temperatur von 550 °C aufgeheizt. Diese Temperatur wird 30 Minuten gehalten. Sodann wird in 1 Stunde auf eine Temperatur von 1250 °C aufgeheizt und diese Temperatur für 30 Minuten gehalten. Sodann wird in 2 Stunden auf eine Temperatur von 1525 °C aufgeheizt und diese Temperatur wird 2 Stunden gehalten.

Die auf diese Weise hergestellte und gebrannte Hohlkugelkorundplatte zeigte keine Schwindung und ist von rein weißer Farbe. Das Aluminiumpulver war unter den genannten Bedingungen vollständig oxidiert. Der gewichtsmäßige Zuwachs betrug 90 % vom theoretisch berechneten Wert. Die Festigkeit der Platte war sehr hoch. Die Dichte der Platte betrug 0,95 g/l.

## Patentansprüche

1. Verfahren zur Herstellung eines offenporigen keramischen Formkörpers, **dadurch gekennzeichnet, dass** das Verfahren den Schritt des Aufbringens von Aluminium oder eines aluminiumhaltigen Mediums auf die äußere Oberfläche eines oder mehrerer poröser keramischer Körper und/oder keramischer Hohlkörper, vorzugweise keramischer Hohlkugeln umfasst und dass das Verfahren des weiteren den Schritt der teilweisen oder vollständigen Oxidation des Aluminiums zu Aluminiumoxid umfasst.

2. Verfahren nach Anspruch 1, **dadurch gekennzeichnet, dass** die Oxidation des Aluminiums zu Aluminiumoxid durch Luftsauerstoff durchgeführt wird.

3. Verfahren nach Anspruch 1 oder 2, **dadurch gekennzeichnet, dass** das Aluminium, insbesondere Aluminiumpulver zunächst mit einem Binder, insbesondere mit einem wässrigen Binder vermischt wird und diese Mischung als das aluminiumhaltige Medium sodann mit den keramischen Hohlkörpern bzw. Hohlkugeln zu einer Gesamtmischung vermischt wird, wobei vorzugsweise vorgesehen ist, dass der Binder wenigstens ein wasserlösliches Polymer, insbesondere Polyvinylpyrrolidon und/oder Polyvinylalkohol aufweist.

4. Verfahren nach einem der vorhergehenden Ansprüche, **dadurch gekennzeichnet, dass** auf die äußere Oberfläche der keramischen Hohlkörper, insbesondere Hohlkugeln eine schmelzbare Funktionsschicht aufgebracht wird, die Aluminium, insbesondere Aluminiumpulver enthält, wobei vorzugsweise vorgesehen ist, dass die Funktionsschicht des Weiteren ein oder mehrere Additive, vorzugsweise organische Additive aufweist.

5. Verfahren nach einem der Ansprüche 3 oder 4, **dadurch gekennzeichnet, dass** die Gesamtmischung gemäß Anspruch 3 oder eine Masse keramischer Formkörper gemäß Anspruch 4, vorzugsweise in einer Form, zunächst getrocknet und dann einer thermischen Behandlung unterzogen wird, wobei vorzugsweise vorgesehen ist, dass die Trocknung in einem Temperaturbereich von 30 °C bis 110 °C und die thermische Behandlung in einem Temperaturbereich von 300 °C bis 1600 °C durchgeführt wird.

6. Verfahren nach einem der vorhergehenden Ansprüche, **dadurch gekennzeichnet, dass** das Aluminium bzw. das Aluminiumpulver einen Reinheitsgrad von mindestens 99 %, vorzugsweise von mindestens 99,5 % aufweist und/oder dass das Aluminium bzw. das Aluminiumpulver mit weiteren Elementen, insbesondere Magnesium, Silizium, Titan, Yttrium und/oder Lanthan legiert ist, und/oder und/oder dass die Hohlkörper bzw. die Hohlkugeln einen Außendurchmesser im Bereich von 0,1 mm bis 3,0 mm, vorzugsweise im Bereich von 0,25 mm bis 1,0 mm aufweisen und/oder dass das Aluminium in Pulverform vorliegt, wobei vorzugsweise vorgesehen ist, dass die Pulverteilchen eine Partikelgröße im Bereich von 0,001 mm und 0,1 mm, vorzugsweise im Bereich von 0,005 mm bis 0,05 mm aufweisen.

7. Verfahren nach einem der vorhergehenden Ansprüche, **dadurch gekennzeichnet, dass** die Hohlkörper bzw. Hohlkugeln aus einer keramischen Schmelze durch Verdüsen oder durch einen Sinterprozess hergestellt werden und/oder dass die Hohlkörper bzw. Hohlkugeln aus Aluminiumoxid bestehen oder dieses aufweisen, wobei vorzugsweise vorgesehen ist, dass das Aluminiumoxid einen Reinheitsgrad von mindestens 95 %, vorzugsweise von mindestens 98 % aufweist.

8. Verfahren zum Verbinden von Formkörpern, insbesondere von mikroporösen Formkörpern, miteinander, **dadurch gekennzeichnet, dass** das Verfahren den Schritt des Aufbringens von Aluminium oder eines aluminiumhaltigen Mediums auf die äußere Oberfläche eines oder beider miteinander zu verbindender Formkörper umfasst und dass das Verfahren des weiteren den Schritt der teilweisen oder vollständigen Oxidation des Aluminiums zu Aluminiumoxid umfasst.

9. Verfahren nach Anspruch 8, **dadurch gekennzeichnet, dass** es sich bei den Formkörpern um planparallele Platten, insbesondere um planparallele mikroporöse Platten handelt und/oder, dass das Verfahren gemäß dem kennzeichnenden Teil eines der der Ansprüche 2 bis 7 ausgeführt ist.

10. Formkörper umfassend eine Mehrzahl von einzelnen Formkörpern, insbesondere mikroporösen Formkörpern, und/oder insbesondere offenporiger keramischer Formkörper umfassend eine Mehrzahl von keramischen Hohlkörpern, insbesondere Hohlkugeln, **dadurch gekennzeichnet, dass** sich zwischen den einzelnen Formkörpern bzw. zwischen den Hohlkörpern ein Verbindungsmittel befindet, dass aus Aluminiumoxid besteht oder dieses umfasst.

11. Formkörper nach Anspruch 10, **dadurch gekennzeichnet, dass** die Hohlkörper bzw. Hohlkugeln aus Aluminiumoxid bestehen oder dieses aufweisen und/oder, dass die Hohlkörper bzw. Hohlkugeln Schalenbruch aufweisen, wobei vorzugsweise vorgesehen ist, dass die Hohlkörper bzw. Hohlkörper einen Schalenbruch von unter 10 Gew.-% aufweisen.

12. Formkörper nach einem der Ansprüche 10 oder 11, **dadurch gekennzeichnet, dass** das Verbindungsmittel ausschließlich oder überwiegend in den Zwickelbereichen zwischen den Hohlkörpern bzw. Hohlkugeln vorliegt, und/oder, dass der Formkörper nach einem Verfahren nach einem der Ansprüche 1 bis 9 hergestellt ist.

13. Verwendung von Aluminium, insbesondere von Aluminiumpulver als Bestandteil eines Verbindungsmittels, das zwischen Hohlkörpern, insbesondere Hohlkugeln eines offenporigen keramischen Formkörpers eingebracht wird und/oder das zwischen gesinterten Formteilen und/oder das zwischen Formkörpern, insbesondere zwischen mikroporösen Formkörpern eingebracht wird.

14. Verwendung nach Anspruch 13, **dadurch gekennzeichnet, dass** die Hohlkörper bzw. Hohlkugeln aus Aluminiumoxid bestehen oder dieses aufweisen.

15. Verwendung nach Anspruch 13 oder 14, **dadurch gekennzeichnet, dass** das Aluminium bzw. das Aluminiumpulver einen Reinheitsgrad von über 99 %, vorzugsweise von über 99,5 % aufweist und/oder dass das Aluminium bzw. das Aluminiumpulver mit weiteren Elementen, insbesondere Magnesium, Silizium, Titan, Yttrium und/oder Lanthan legiert ist, und/oder dass das Aluminium in Pulverform vorliegt, wobei vorzugsweise vorgesehen ist, dass die Pulverteilchen eine Partikelgröße im Bereich von 0,001 mm und 0,1 mm, vorzugsweise im Bereich von 0,005 mm bis 0,05 mm aufweisen.
